# EUROPEAN PATENT SPECIFICATION

(11) **EP 0 640 427 B1**
(45) Date of publication and mention of the grant of the patent: **02.01.2003**
(21) Application number: 94306277.8
(22) Date of filing: 25.08.1994
(51) Int. Cl.: B23K 11/00, F16F 15/32

(54) **Counterweight attachment technique**
Ausgleichgewichtsbefestigungstechnik
Technique de fixation de contre-poids

(30) Priority: 25.08.1993 US 111492
(43) Date of publication of application: 01.03.1995
(73) Proprietor: DANA CORPORATION, Toledo, OH 43615 (US)
(72) Inventor: Rhoda, Donald A., Toledo, Ohio 43623 (US); Dutkiewicz, Jeffrey A., Toledo, Ohio 43606 (US); Gould, Jerry E., Columbus, Ohio 43212 (US); Cox, Anthony M., Rochester NY 14606 (US); Reynolds, James T., Toledo, Ohio 43612 (US)
(74) Representative: Cheyne, John Robert Alexander Mackenzie

(56) References cited:
- EP-A- 0 520 719
- DE-A- 3 140 368
- DE-A- 3 925 181
- GB-A- 2 147 388
- GB-A- 2 236 163
- US-A- 3 687 244
- PATENT ABSTRACTS OF JAPAN vol. 7, no. 250 (M-254) 8 November 1983 & JP-A-58 135 779 (KIYOSUMI TAKAYASU) 12 August 1983

## Description

The present invention relates to use of transition materials to attach steel to aluminium. More particularly, the present invention relates to a method for attaching a steel counterweight to an aluminium shaft by projection welding using transition materials components. While the invention is subject to a wide range of applications, it is especially suited for use in balancing an aluminium drive shaft for rotation about an axis and will be particularly described in that connection.

Often, it is desirable to employ combinations of materials in order to obtain benefits of the properties of each material. For example, drive shafts for vehicles may be developed of aluminium, which offers substantial weight reduction and reduced rotational inertia over steel drive shafts. However, counterweights must be attachable to the shafts in order to properly balance the shafts. The preferred material for these counterweights is steel, since steel has a significantly greater mass density than aluminium and a much larger piece of aluminium would be required to perform as a counterweight if aluminium were used. Hence, it is desired to combine the light weight, heat conductivity, electrical conductivity, and corrosion resistance properties of aluminium with the greater mass density, high strength, and hardness, of steel. However, joining these two materials presents many problems.

One method of joining aluminium and steel is resistance projection welding. The typical resistance projection welding method of joining aluminium to steel, however, is generally considered infeasible due to formation of undesirable discontinuities or defects along the bond line or weld zone.

Another method of joining aluminium to steel is fusion welding. However, steel and aluminium are of considerably different melting points, making fusion welding difficult. In particular, steel and aluminium form a series of brittle intermetallics. As a result, many problems occur in trying to fusion weld steel to aluminium including discontinuities in the weld line, weak welds between two incompatible materials such as steel and aluminium, breakage due to differential expansion and contraction, diffusion forming brittle intermetallic compounds at the interface between the two materials, high stresses due to residual strains from the welding operation, and galvanic couples that cause corrosion.

It is seen then that there exists a need for a process of attaching steel to aluminium which overcomes the aforementioned problems, including reducing the amount of heat introduced into the aluminium and, thus, the thermal expansion and deformation of the aluminium during attachment to the steel. EP-A-0520719 discloses a method and apparatus for balancing an aluminium drive shaft using a transition material component to attach steel counterweights to the aluminium drive shaft. The transition material component is disposed between the outer surface of the aluminium drive shaft and an inner surface of the steel counterweights. A resistance welding process is then used to attach the steel counterweights and transition material component to the aluminium drive shaft. The transition material component may be provided with a projection on its surface adjacent the counterweight.

GB-A-2236163 relates to a balance weight for attachment to a rotary shaft, comprising a plate which has at least two fixing points which provide for the weight to be attached to the shaft, with a relief groove around each fixing point. The fixing points may comprise formations for projection welding to the shaft, or may be apertures for receiving mechanical fasteners.

According to a first aspect of the present invention, there is provided a method of attaching a steel counterweight to a tubular aluminium drive shaft, the steel counterweight having an inner surface and an outer surface, and the aluminium drive shaft having an outer surface facing radially away from an axis about which the aluminium drive shaft rotates, the method comprising the steps of:
disposing a transition material component between the outer surface of the aluminium drive shaft and the inner surface of the steel counterweight, the transition material component having a first surface adjacent to the inner surface of the steel counterweight and a second surface adjacent to the outer surface of the aluminium drive shaft, the first surface being steel and the second surface being aluminium; and
resistance welding the counterweight to the aluminium drive shaft by passing an electrical current through the counterweight, the transition material component, and the aluminium drive shaft while maintaining pressure on the outer surface of the counterweight against the drive shaft, thereby creating a steel-steel bond between the inner surface of the counterweight and the first surface of the transition material component and an aluminium-aluminium bond between the second surface of the transition material component and the outer surface of the aluminium drive shaft, in which method before the transition material component is disposed between the outer surface of the aluminium drive shaft and the inner surface of the steel counterweight an outward projection is formed on the inner surface of the steel counterweight, and in that both the first and second surfaces are without outward projections in an area to be welded.

The transition material components typically comprise two or more layers of different materials which are bonded together. The projection on the inner surface of the steel counterweight allows for the metering of the heat flow from the steel to the aluminium and so prevents excess heat from being transmitted to the aluminium tube during welding.

An advantage of the use of a transition material component during the resistance welding process is the reduction of the amount of heat introduced to the aluminium drive shaft, which reduces the thermal expansion and deformation of the drive shaft during the counterweight attachment. The resistance welding process provides the further advantage of eliminating expulsion from the aluminium and minimizing expulsion from the steel during the welding process.

In a preferred embodiment of the present invention, the transition material component has at least two layers including a steel layer and an aluminium layer. In practice, the thickness of the steel layer may be substantially less than the thickness of the steel counterweight.

The shape of the outward projection on the inner surface of the steel counterweight is preferably in the shape of a ring and may be a C-shaped ring having an opening in one part of the ring to allow gases to escape, although the shape of the projection may be made in many different configurations from a square with an opening to several parallel lines. The outward projection on the inner surface of the steel counterweight prevents excess heat from being transmitted to the aluminium drive shaft during the resistance welding process.

According to a second aspect of the present invention, there is provided a metallic composite adapted for attachment to a tubular aluminium drive shaft by resistance welding for balancing the aluminium drive shaft during rotation, the aluminium drive shaft having an outer surface facing radially away from an axis about which the aluminium drive shaft rotates, comprising:
a steel counterweight having an inner surface and an outer surface;
a transition material component having a first surface and a second surface, the first surface being steel and the second surface being aluminium, both the first and second surfaces being without outward projections in an area to be welded, the first surface being tack welded to the inner surface of the counterweight, the inner surface of the counterweight having a projection thereon.

For a better understanding of the present invention and to show more clearly how it may be carried into effect, reference will now be made, by way of example, to the accompanying drawings, in which:-
Fig. 1 is a cross-sectional view of a transition material used to attach steel counterweights to aluminum drive shafts;
Fig. 2A is a plan view of a steel counterweight;
Fig. 2B is a side view of the steel counterweight in Fig. 2A;
Fig. 3A is a plan view of a transition material component;
Fig. 3B is a side view of the transition material component in Fig. 3A;
Fig. 4 is a cross-section of the transition material component along line 4-4 in Fig. 3A;
Fig. 5 is a side view of the assembly of the counterweight and the transition material component;
Fig. 6 is an exploded view of an aluminum drive shaft and the counterweight-transition material component assembly to be attached to the aluminum drive shaft;
Fig. 7A is a plan view a steel counterweight with a projection on the inner surface, in accordance with the present invention;
Fig. 7B is a cross-section of the steel counterweight along the line 6-6 in Fig. 7A;
Fig. 7C is an expanded view of the projection in the steel counterweight in Fig. 7B; and
Fig. 8 is a side view of the assembly of the counterweight and the transition material component according to the present invention.

The present invention provides a method for resistance welding steel counterweights to aluminium tube drive shafts, and an improved drive shaft made by this method, wherein an aluminium to steel transition material component is used to attach steel counterweights to aluminium drive shafts through resistance projection welding. A transition material component is disposed between the outer surface of an aluminium drive shaft and the inner surface of a steel counterweight. The surface of the transition material component adjacent to the drive shaft is aluminium, and the surface of the transition material component adjacent to the counterweight is steel.

During the resistance welding process, heat generated in the steel counterweight forms a steel-steel bond between the counterweight and the surface of the transition material component adjacent to the counterweight. Heat lost from this weld is conducted into the aluminium, forming an aluminium-aluminium bond between the drive shaft and the surface of the transition material component adjacent to the drive shaft. A plurality of geometric shapes may be formed on the surface of the transition material component which is adjacent to the counterweight, but in accordance with the present invention these shapes or projections are formed on the inner surface of the steel counterweight which is adjacent to the transition material component, to localize the application of heat to the transition material component and prevent excess heat from being transmitted to the aluminium so as to cause undesirable melting.

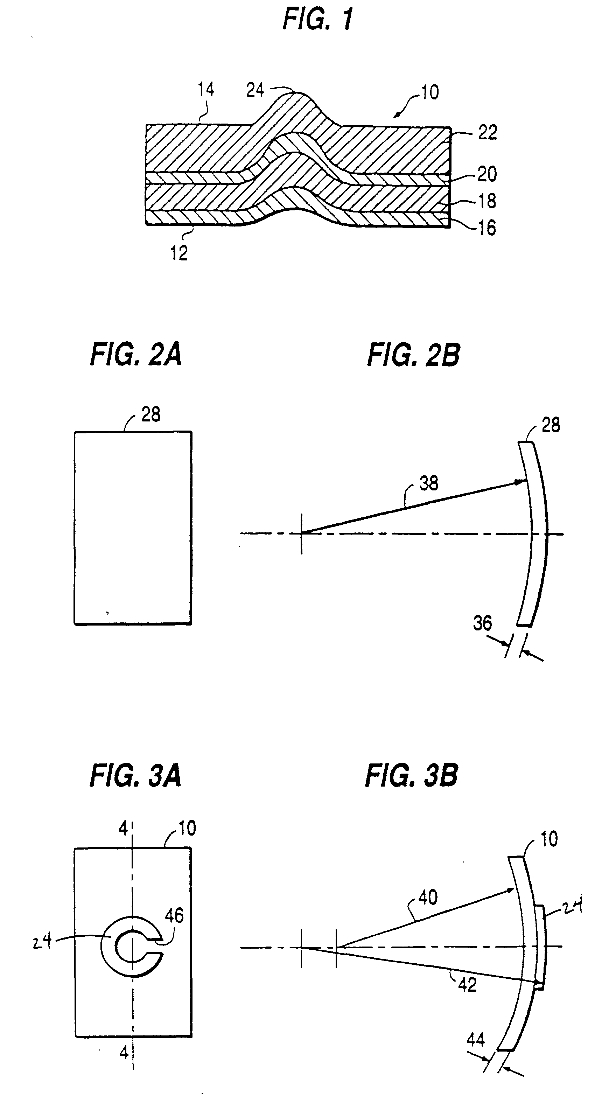

Referring now to the drawings, in Fig. 1 there is illustrated a cross sectional view of the layers comprising a transition material component. The transition material component, generally designated 10, has a first surface 12 and a second surface 14. Surface 12 is aluminium and surface 14 is steel. The transition material component 10 is also comprised of at least two, and preferably four, layers 16, 18, 20, and 22. Layers 16, 18, and 20 are aluminium layers of varying grades. In a preferred arrangement, layers 16 and 20 comprise aluminium 1145, and layer 18 comprises aluminium 5052. The fourth layer 22 is a steel layer, preferably low carbon steel such as steel 1008. The total thickness of the transition material component 10 may range from 1.27 to 1.52 mm (0.050 to 0.060 inches) and is preferably 1.52 mm (0.060 inches) thick. The ratio of aluminium (layers 16, 18 and 20) to steel (layer 22) may vary from 50% aluminium and 50% steel up to the presently preferred ratio of 70% aluminium to 30% steel. A transition material component of this type is available from Texas Instruments (registered trade mark).

Continuing with the drawings, the transition material component 10 permits the attachment of a steel counterweight 28, shown in Figs. 2A and 2B, to an aluminium drive shaft. Preferably, the steel counterweight is made of low carbon steel, such as steel 1008, the same as layer 22 of transition material component 10. As shown in Fig. 2A, the counterweight is typically rectangular in shape and may come in a variety of weights and sizes. For example, for use on aluminium drive shafts, the thickness 36 of counterweight 28, as shown in Fig. 2B, may range from 1.65 to 3.40 mm (0.065 inches to 0.134 inches), depending on the desired weight. Likewise, counterweight 28 comes in various sizes ranging from approximately 15.2 mm by 15.2 mm (0.6 inches by 0.6 inches) to 25.4 mm by over 50.8 mm (1 inch by over 2 inches). The corresponding weights range from approximately 2.83 g to 36.9 g (0.1 ounce to over 1.3 ounces).

Also as shown in Fig. 2B, counterweight 28 is preferably curved having a radius 38 that is slightly greater than the radius of the aluminium tube to which it will be attached. For example, for attachment to an aluminium tube having a radius of 50.8 mm (2 inches), the radius 38 of the curve of counterweight 28 is approximately 62.2 mm (2.45 inches).

As noted above, the preferred thickness of the transition material component 10 is approximately 1.52 mm (0.060 inches), whereas the corresponding thickness of steel counterweight 28 may range from 1.65 to 3.40 mm (0.065 inches to 0.134 inches). Steel layer 22 in transition material component 10 may therefore be much thinner than the steel of the counterweight to be attached to the aluminium tube. In order to provide proper heat balance between the relatively thin transition material component 10 and the relatively thick attached steel counterweight 28, one or more geometric shapes may be formed, projecting outwardly, on the transition material component 10. The projecting geometric shape 24 is formed by stamping transition material component 10 and projects outwardly on the steel surface 14 of the transition material component 10, as illustrated in Figs. 1 and 3A. The projecting geometric shape 24 concentrates the heat generation in the steel counterweight 28 at the steel surface 14 and improves the heat balance during the resistance welding process, preventing excess heat from being transmitted to the aluminium drive shaft.

Transition material component 10 is cut into a piece that is the same size as the counterweight 28 which is to be attached to the aluminium tube. As shown in Fig. 3B, transition material component 10 is preferably curved having a radius 40 that is the same as the radius of the aluminium tube to which the transition material component and steel counterweight will be attached. The top of projection 24 in transition material component 10, however, should have the same curvature as the steel counterweight which will be attached to it. As noted above, counterweight 28 is curved with a radius 38 that is slightly greater than the radius of the aluminium tube. Therefore, the curvature of the top of projection 24 should have a radius 42 that is the same as radius 38 of counterweight 28. Also as noted above, transition material component 10 has a preferred thickness 44 of 1.52 mm (0.060 inches).

The geometric shape of projection 24 in transition material component 10 may be any of a variety of shapes, depending on the weight and size of the steel counterweight 28 to be attached to the aluminium drive shaft. As shown in Fig. 3A, the shape of projection 24 is preferably a ring having an opening 46 in one part of this ring. This "C"-shaped projection adds surface area for the weld while leaving an opening for gases to escape. While the presently preferred shape of the projection in transition material component 10 is the "C" shape illustrated in Fig. 3A, the geometric shape of the projection may be made in many different configurations from a square with an opening to several parallel lines.

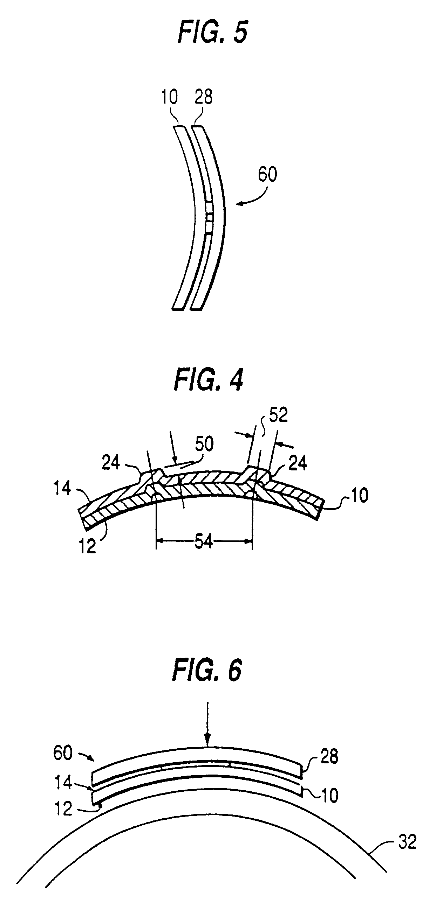

Additional details of the preferred geometric shape of the projection are shown in Fig. 4. Fig. 4 is a cross-section of transition material component 10 in Fig. 3A along line 4-4 bisecting the material. Projection 24, which is stamped in transition material component 10, has a height 50 above surface 14 of the transition material component that is 0.71 mm (0.028 inches), which is a standard for projection welding. The width 52 of the projection is preferably 3.02 mm (0.119 inches), and the "mean crater" diameter 54 of the ring-shaped projection ranges from 5.08 to 10.16 mm (0.200 to 0.400 inches) and is preferably 10.16 mm (0.400 inches).

Before attaching the counterweight to the aluminum tube or drive shaft, transition material component 10 is prewelded by a tack weld to counterweight 28 as illustrated in Fig. 5. Assembly 60, consisting of transition material component 10 and counterweight 28 tackwelded together, is then placed on the aluminium tube and resistance welded to the shaft.

Referring now to Fig. 6, assembly 60 is positioned such that the surface 12 of transition material component 10 will contact an outer surface 32 of the aluminium drive shaft 30, in order to create an aluminium-aluminium bond between the aluminium drive shaft 30 and the first surface 12 of the transition material component 10, from heat lost during the resistance welding process. Likewise, surface 14 of transition material component 10 will contact an inner surface of the steel counterweight 28 in order to create a steel-steel bond between the steel counterweight 28 and the second surface 14 of the transition material component 10, from heat generated in the steel counterweight 28 during the resistance welding process. The geometric shape 24 projects outwardly from surface 14 of transition material component 10, toward the steel counterweight 28, to concentrate heat generation in the steel counterweight 28 at the steel-steel interface during the resistance welding process.

In order to weld the counterweight and the transition material component to the aluminium tube, copper electrodes of a resistance welding apparatus are placed on opposite sides of the aluminium tube. A bottom electrode supports the tube, whereas a top electrode applies pressure to the counterweight. Electrical current is passed between the electrodes through the counterweight, the transition material component, and the aluminium tube to effect the weld. Pressure is maintained on the counterweight for a short period of time after the current is turned off.

The parameters such as force and current for resistance welding the steel counterweight to the aluminium drive shaft will vary depending on the size and thickness of the counterweight, the type of transition material used, and the shape of the projection in the transition material component. For example, the secondary current may range from 18,000 amperes up to as high as 30,000 amperes, and the number of cycles may vary from 8 to 12. Similarly, the force on the counterweight may range from 159 to 204 Kg (350 to 450 lbs).

During such welding, heat generated in the steel counterweight 28 forms a steel-steel bond between the counterweight 28 and the surface 14 of the transition material component 10. Aluminium has a much lower melting temperature than steel and therefore requires much less heat to make the aluminium-aluminium bond between the transition material component and the aluminium drive shaft. Heat lost from the steel-to-steel weld is conducted into the aluminium, forming a bond between the drive shaft 30 and the surface 12 of the transition material component. The projection 24 formed on the surface 14 of the transition material component localizes the application of heat to the transition material component 10 and prevents excess heat from being transmitted to the aluminium drive shaft 30, so as to prevent undesirable melting or warping.

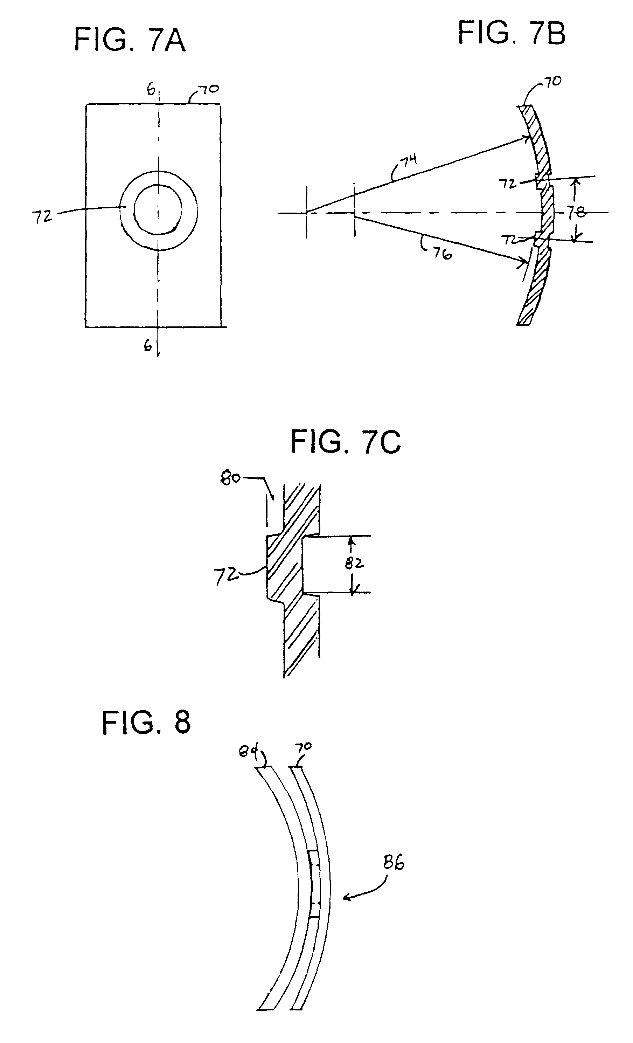

In accordance with the present invention, instead of projections in the transition material component, the steel counterweight can also be attached to the aluminium tube by using a projection or projections on the inner surface of the steel counterweight adjacent to the steel surface of the transition material component. An embodiment of the present invention is illustrated in Figs. 7A, 7B, 7C, and 8. The various dimensions and specifications for this embodiment of the invention may be as described above, except in respect of the projection or projections.

Specifically, Figs. 7A, 7B, and 7C show a steel counterweight 70 having a projection 72 on the inner surface. The steel counterweight 70 is rectangular in shape and may come in a variety of weights and sizes. The counterweight is preferably made of low carbon steel, the same as the steel surface of the transition material component.

A geometric shape 72, projecting outwardly from the inner surface of the counterweight 70, is formed by stamping the counterweight. Like the projection in the transition material component described above, the projection in the steel counterweight concentrates the heat generation in the counterweight and the steel surface of the transition material component, and prevents excess heat from being transmitted to the aluminium drive shaft. The geometric shape in the steel counterweight may be in any of a variety of shapes, depending on the size and weight of the counterweight. As shown in Fig. 7A, the shape of the projection 72 is preferably a ring, although the geometric shape of the projection may be made in many different configurations.

Fig. 7B is a cross-section of the counterweight 70 in Fig. 7A along the line 6-6 bisecting the counterweight. As shown in Fig. 7B, the steel counterweight 70 is preferably curved, having a radius 74 that is slightly greater than the radius of the aluminium tube to which it will be attached. For example, for attachment to an aluminium tube having a radius of 50.8 mm (2 inches), the radius 74 of the curve of the counterweight 70 is approximately 62.2 mm (2.45 inches). The top of projection 72 in the counterweight, however, should have the same or only a slightly greater curvature as the transition material component that will be used to attach the counterweight to the aluminium tube. Thus, where the transition material component is curved with a radius that is approximately the same as the aluminium tube, the curvature of the top of the projection 72 should have a radius 76 that is the same or slightly greater. The "mean crater" diameter 78 of the projection 72 may range, for example, from 5.08 to 10.16 mm (.200 inches to .400 inches), depending on the counterweight.

Additional details of the projection 72 formed in the steel counterweight 70 are shown in Fig. 7C. Projection 72, which is stamped in the counterweight, has a height 80 above the inner surface of the counterweight that depends on the size and thickness of the counterweight and may, for example, range from approximately 0.58 to 0.84 mm (0.023 inches to 0.033 inches), although other ranges might be used. In the embodiment shown in Fig. 7C, the width 82 of the projection 72 is approximately 2.54 to 3.05 mm (0.100 to 0.120 inches).

The transition material component for attaching steel counterweight 70 to the aluminium tube may be cut into a piece that is the same size as the counterweight. The transition material component is essentially the same as illustrated in Figs. 1, 3A, and 3B, except without projection 24. The transition material component is preferably curved with a radius that is the same as the radius of the aluminium tube to which the transition material component and the steel counterweight will be attached.

Before attaching the counterweight to the aluminium tube, the transition material component is prewelded by a tackweld to counterweight as illustrated in Fig. 8. Assembly 86, consisting of transition material component 84 and counterweight 70 tackwelded together, is then placed on the aluminium tube and resistance welded to the shaft as described above in connection with Fig. 6.

Having described the invention in detail and by reference to the preferred embodiment thereof, it will be apparent that other modifications and variations are possible without departing from the scope of the invention defined in the appended claims.

## Claims

1. A method of attaching a steel counterweight (70) to a tubular aluminium drive shaft, the steel counterweight (70) having an inner surface and an outer surface, and the aluminium drive shaft having an outer surface facing radially away from an axis about which the aluminium drive shaft rotates, the method comprising the steps of:
disposing a transition material component (84) between the outer surface of the aluminium drive shaft and the inner surface of the steel counterweight (70), the transition material component (84) having a first surface adjacent to the inner surface of the steel counterweight (70) and a second surface adjacent to the outer surface of the aluminium drive shaft, the first surface being steel and the second surface being aluminium; and
resistance welding the counterweight (70) to the aluminium drive shaft by passing an electrical current through the counterweight (70), the transition material component (84), and the aluminium drive shaft while maintaining pressure on the outer surface of the counterweight (70) against the drive shaft, thereby creating a steel-steel bond between the inner surface of the counterweight (70) and the first surface of the transition material component (84) and an aluminium-aluminium bond between the second surface of the transition material component (84) and the outer surface of the aluminium drive shaft, **characterised in that** before the transition material component (84) is disposed between the outer surface of the aluminium drive shaft and the inner surface of the steel counterweight (70) an outward projection (72) is formed on the inner surface of the steel counterweight (70), and **in that** both the first and the second surfaces are without outward projections in an area to be welded.

2. A method as claimed in claim 1, **characterised in that** the transition material component (84) has at least two layers including a steel layer at the first surface and an aluminium layer at the second surface.

3. A method as claimed in claim 2, **characterised in that** the transition material component (84) has a plurality of aluminium layers of varying grades of aluminium.

4. A method as claimed in any one of the preceding claims, **characterised in that** the outward projection (72) is in the shape of a ring.

5. A method as claimed in any one of the preceding claims, **characterised in that** there are a plurality of outward projections (72) on the inner surface of the steel counterweight (70).

6. A method as claimed in any one of the preceding claims, **characterised by** the step of tack welding the transition material component (84) to the counterweight (70) before the step of resistance welding the counterweight (70) to the aluminium drive shaft.

7. A method as claimed in any one of the preceding claims, **characterised by** the step of maintaining the pressure on the outer surface of the counterweight (70) against the aluminium drive shaft after the current is turned off.

8. A metallic composite adapted for attachment to a tubular aluminium drive shaft by resistance welding for balancing the aluminium drive shaft during rotation, the aluminium drive shaft having an outer surface facing radially away from an axis about which the aluminium drive shaft rotates, comprising:
a steel counterweight (70) having an inner surface and an outer surface;
a transition material component (84) having a first surface and a second surface, the first surface being steel and the second surface being aluminium, the first surface being tack welded to the inner surface of the counterweight (70), **characterised in that** the inner surface of the counterweight (70) has a projection (72) thereon and **in that** both the first and second surfaces are without outward projections in an area to be welded.

9. A metallic composite as claimed in claim 8, **characterised in that** the transition material component (84) has at least two layers including a steel layer at the first surface and an aluminium layer at the second surface.

10. A metallic composite as claimed in claim 9, **characterised in that** the transition material component (84) has a plurality of aluminium layers of varying grades of aluminium.

11. A metallic composite as claimed in any one of claims 13 to 15, **characterised in that** the outward projection (72) is in the shape of a ring.

12. A metallic composite as claimed in any one of claims 8 to 11, **characterised in that** there are a plurality of outward projections (72) on the inner surface of the steel counterweight (70).

13. A metallic composite as claimed in any one of claims 8 to 12, **characterised in that** the steel counterweight (70) is curved, the curvature of the inner surface of the counterweight (70) having a radius (74) that is greater than the radius of the aluminium drive shaft.

14. A metallic composite as claimed in any one of the preceding claims, **characterised in that** the transition material component (84) is curved, the curvature of the second surface of the transition material component (84) having a radius that is the same as the radius of the drive shaft.

15. A metallic composite as claimed in claim 14, **characterised in that** the curvature of the projection (72) on the first surface of the transition material component (84) has a radius (76) that is the same as the radius (74) of the inner surface of the counterweight.

## Patentansprüche

1. Verfahren zum Anbringen eines Stahlausgleichsgewichts (70) an einer rohrförmigen Aluminiumantriebswelle, wobei das Stahlausgleichsgewicht (70) eine innere Fläche und eine äußere Fläche hat, und die Aluminiumantriebswelle eine äußere Fläche hat, die von einer Achse radial wegweist, um die sich die Aluminiumantriebswelle dreht, wobei das Verfahren die folgenden Schritte aufweist:
Anordnen einer Übergangsmaterialkomponente (84) zwischen der äußeren Fläche der Aluminiumantriebswelle und der inneren Fläche des Stahlausgleichsgewichts (70), wobei die Übergangsmaterialkomponente (84) eine erste, an die innere Fläche des Stahlausgleichsgewichts (70) angrenzende Fläche und eine zweite an die äußere Fläche der Aluminiumantriebswelle angrenzende Fläche hat, wobei die erste Fläche Stahl und die zweite Aluminium ist; und
Widerstandsschweißen des Ausgleichsgewichts (70) an die Aluminiumantriebswelle unter Durchleitung eines elektrischen Stroms durch das Ausgleichsgewicht (70), die Übergangsmaterialkomponente (84) und die Aluminiumantriebswelle unter Aufrechterhaltung eines Drucks auf die äußere Fläche des Ausgleichsgewichts (70) gegen die Antriebswelle, wodurch eine Stahl-Stahl-Bindung zwischen der inneren Fläche des Ausgleichsgewichts (70) und der ersten Fläche der Übergangsmaterialkomponente (84) und eine Aluminium-Aluminium-Bindung zwischen der zweiten Fläche der Übergangsmaterialkomponente (84) an der äußeren Fläche der Aluminiumantriebswelle gebildet wird, **dadurch gekennzeichnet, daß** vor der Anordnung der Übergangsmaterialkomponente (84) zwischen der äußeren Fläche der Aluminiumantriebswelle und der inneren Fläche des Stahlausgleichgewichts (70) ein nach außen weisender Vorsprung (72) auf der inneren Fläche des Stahlausgleichgewichts (70) ausgebildet wird, und daß die erste und die zweite Fläche ohne nach außen weisende Vorsprünge am zu verschweißenden Bereich ausgebildet sind.

2. Verfahren nach Anspruch 1, **dadurch gekennzeichnet, daß** die Übergangsmaterialkomponente (84) wenigstens zwei Schichten hat, welche eine Stahlschicht an der ersten Fläche und eine Aluminiumschicht an der zweiten Fläche umfassen.

3. Verfahren nach Anspruch 2, **dadurch gekennzeichnet, daß** die Übergangsmaterialkomponente (84) eine Mehrzahl von Aluminiumschichten aus unterschiedlichen Aluminiumsorten hat.

4. Verfahren nach einem der vorangehenden Ansprüche, **dadurch gekennzeichnet, daß** der nach außen weisende Vorsprung (72) in Form eines Rings ausgebildet ist.

5. Verfahren nach einem der vorangehenden Ansprüche, **dadurch gekennzeichnet, daß** eine Mehrzahl von nach außen weisenden Vorsprüngen (72) auf der inneren Fläche des Stahlausgleichgewichts (70) vorgesehen ist.

6. Verfahren nach einem der vorangehenden Ansprüche, **dadurch gekennzeichnet, daß** die Übergangsmaterialkomponente (84) an dem Ausgleichsgewicht (70) mittels Heftschweißen angebracht wird, bevor die Widerstandsschweißung von Ausgleichsgewicht (70) und Aluminiumantriebswelle erfolgt.

7. Verfahren nach einem der vorangehenden Ansprüche, **dadurch gekennzeichnet, daß** der Druck auf die äußere Fläche des Ausgleichsgewicht (70) gegen die Aluminiumantriebswelle aufrecht erhalten wird, nachdem der Strom abgeschaltet ist.

8. Metallisches Verbundmaterial, welches derart beschaffen und ausgelegt ist, daß es bei einer rohrförmigen Aluminiumantriebswelle mittels Widerstandsschweißen zum Auswuchten der Aluminiumantriebswelle während einer Drehbewegung angebracht werden kann, wobei die Aluminiumantriebswelle eine äußere Fläche hat, die von einer Achse radial wegweist, um die die Aluminiumantriebswelle eine Drehbewegung ausführt, und welches folgendes aufweist:
ein Stahlausgleichgewichts (70), welches eine innere Fläche und eine äußere Fläche hat;
eine Übergangsmaterialkomponente (84), welche eine erste Fläche und eine zweite Fläche hat, wobei die erste Fläche Stahl und die zweite Fläche Aluminium ist, und wobei die erste Fläche mittels Heftschweißen an der inneren Fläche des Ausgleichsgewicht (70) anbringbar ist, **dadurch gekennzeichnet, daß** die innere Fläche des Ausgleichsgewichts (70) einen Vorsprung (72) hat, und daß die ersten und die zweiten Flächen an einem zu verschweißenden Bereich ohne nach außen weisende Vorsprünge ausgebildet sind.

9. Metallisches Verbundmaterial nach Anspruch 8, **dadurch gekennzeichnet, daß** die Übergangsmaterialkomponente (84) wenigstens zwei Schichten hat, welche eine Stahlschicht an der ersten Fläche und eine Aluminiumschicht an der zweiten Fläche umfassen.

10. Metallisches Verbundmaterial nach Anspruch 9, **dadurch gekennzeichnet, daß** die Übergangsmaterialkomponente (84) eine Mehrzahl von Schichten aus unterschiedlichen Aluminiumsorten hat.

11. Metallisches Verbundmaterial nach einem der Ansprüche 13 bis 15, **dadurch gekennzeichnet, daß** der nach außen weisende Vorsprung (72) in Form eines Rings ausgebildet ist.

12. Metallisches Verbundmaterial nach einem der Ansprüche 8 bis 11, **dadurch gekennzeichnet, daß** eine Mehrzahl von nach außen weisenden Vorsprüngen (72) auf der inneren Fläche des Stahlausgleichgewichts (70) vorgesehen ist.

13. Metallisches Verbundmaterial nach einem der Ansprüche 1 bis 12, **dadurch gekennzeichnet, daß** das Stahlausgleichgewichts (70) gekrümmt ausgebildet ist, und daß die Krümmung der inneren Fläche des Ausgleichsgewichts (70) einen Radius (74) hat, welcher größer als der Radius der Aluminiumantriebswelle ist.

14. Metallisches Verbundmaterial nach einem der vorangehenden Ansprüche, **dadurch gekennzeichnet, daß** die Übergangsmaterialkomponente (84) gekrümmt ausgebildet ist und daß die Krümmung der zweiten Fläche der Übergangsmaterialkomponente (84) einen Radius hat, welcher gleich groß wie der Radius der Antriebswelle ist.

15. Metallisches Verbundmaterial nach Anspruch 14, **dadurch gekennzeichnet, daß** die Krümmung des Vorsprungs (72) auf der ersten Fläche der Übergangsmaterialkomponente (84) einen Radius (76) hat, welcher gleich groß wie der Radius (74) der inneren Fläche des Ausgleichsgewichts (70) ist.

## Revendications

1. Procédé de fixation d'un contre-poids en acier (70) à un arbre d'entraînement tubulaire en aluminium, le contre-poids en acier (70) présentant une surface interne et une surface externe, et l'arbre d'entraînement en aluminium présentant une surface externe orientée radialement au loin d'un axe autour duquel l'arbre d'entraînement en aluminium tourne, le procédé comprenant les étapes consistant à :
disposer un composant de matériau de transition (84) entre la surface externe de l'arbre d'entraînement en aluminium et la surface interne du contre-poids en acier (70), le composant de matériau de transition (84) présentant une première surface adjacente à la surface interne du contre-poids en acier (70) et une seconde surface adjacente à la surface externe de l'arbre d'entraînement en aluminium, la première surface étant en acier et la seconde surface étant en aluminium ; et
souder par résistance le contre-poids (70) à l'arbre d'entraînement en aluminium en faisant passer un courant électrique à travers le contre-poids (70), le composant de matériau de transition (84) et l'arbre d'entraînement en aluminium tout en maintenant la pression sur la surface externe du contre-poids (70) contre l'arbre d'entraînement, en créant ainsi une liaison acier-acier entre la surface interne du contre-poids (70) et la première surface du composant du matériau de transition (84) et une liaison aluminium-aluminium entre la seconde surface du composant de matériau de transition (84) et la surface externe de l'arbre d'entraînement en aluminium, **caractérisé en ce que**, avant que le composant de matériau de transition (84) ne soit disposé entre la surface externe de l'arbre d'entraînement en aluminium et la surface interne du contre-poids en acier (70), une saillie extérieure (72) est formée sur la surface interne du contre-poids en acier (70), et **en ce que** à la fois la première et la seconde surface sont exemptes de saillies externes dans une zone à souder.

2. Procédé selon la revendication 1, **caractérisé en ce que** le composant de matériau de transition (84) comporte au moins deux couches incluant une couche d'acier à la première surface et une couche d'aluminium à la seconde surface.

3. Procédé selon la revendication 2, **caractérisé en ce que** le composant de matériau de transition (84) présente plusieurs couches d'aluminium de divers grades d'aluminium.

4. Procédé selon l'une des revendications précédentes, **caractérisé en ce que** la saillie extérieure (72) se présente sous la forme d'une bague.

5. Procédé selon l'une des revendications précédentes, **caractérisé en ce qu'**il y a plusieurs saillies externes (72) sur la surface interne du contre-poids en acier (70).

6. Procédé selon l'une des revendications précédentes, **caractérisé par** l'étape consistant à pointer le composant de matériau de transition (84) au contre-poids (70) avant l'étape du soudage par résistance du contre-poids (70) à l'arbre d'entraînement en aluminium.

7. Procédé selon l'une des revendications précédentes, **caractérisé par** l'étape consistant à maintenir la pression sur la surface externe du contre-poids (70) contre l'arbre d'entraînement en aluminium après que le courant a été arrêté.

8. Composite métallique apte à être fixé à un arbre d'entraînement tubulaire en aluminium par soudage par résistance pour équilibrer l'arbre d'entraînement en aluminium pendant la rotation, l'arbre d'entraînement en aluminium présentant une surface externe orientée radialement au loin d'un axe autour duquel l'arbre d'entraînement en aluminium tourne, comprenant :
un contre-poids en acier (70) présentant une surface interne et une surface externe ;
un composant de matériau de transition (84) ayant une première surface et une seconde surface, la première surface étant en acier et la seconde surface étant en aluminium, la première surface étant pointée à la surface interne du contre-poids (70), **caractérisé en ce que** la surface interne du contre-poids (70) présente une saillie (72) sur celle-ci et **en ce que** à la fois la première et la seconde surface sont exemptes de saillies externes dans une zone à souder.

9. Composite métallique selon la revendication 8, **caractérisé en ce que** le composant de matériau de transition (84) présente au moins deux couches comprenant une couche d'acier à la première surface et une couche d'aluminium à la seconde surface.

10. Composite métallique selon la revendication 9, **caractérisé en ce que** le composant de matériau de transition (84) possède une pluralité de couches d'aluminium de divers grades d'aluminium.

11. Composite métallique selon l'une des revendications 13 à 15, **caractérisé en ce que** la saillie externe (72) se présente sous la forme d'une bague.

12. Composite métallique selon l'une des revendications 8 à 11, **caractérisé en ce qu'**il y a plusieurs saillies externes (72) sur la surface interne du contre-poids en acier (70).

13. Composite métallique selon l'une des revendications 8 à 12, **caractérisé en ce que** le contre-poids en acier (70) est courbé, la courbure de la surface interne du contre-poids (70) ayant un rayon (74) qui est plus grand que le rayon de l'arbre d'entraînement en aluminium.

14. Composite métallique selon l'une des revendications précédentes, **caractérisé en ce que** le composant de matériau de transition (84) est courbé, la courbure de la seconde surface du composant de matériau de transition (84) ayant un rayon qui est le même que le rayon de l'arbre d'entraînement.

15. Composite métallique selon la revendication 14, **caractérisé en ce que** la courbure de la saillie (72) sur la première surface du composant du matériau de transition (84) a un rayon (76) qui est le même que le rayon (74) de la surface interne du contre-poids.
